# EUROPEAN PATENT APPLICATION

(11) **EP 1 980 747 A1**
(43) Date of publication of application: **15.10.2008**
(21) Application number: 07386004.1
(22) Date of filing: 15.02.2007
(51) Int. Cl.: F03G 1/00, F03G 7/00, F03G 7/10

(54) **Spring device**

(71) Applicant: Doumparatzis, Athanasios, 65302 Kavala (GR)
(72) Inventor: Doumparatzis, Athanasios, 65302 Kavala (GR)

(57) **Abstract**

My engine is based on the change of the existing energies. It dispenses with the explosive energy and it gives us energy from expansion of springs. It accelerates equal and multiple powers in relation with the corresponding volume of the today's engines.

It gives a nil demand in fuel consuming and nil emission of exhaust-gas.

This is succeeded with replacement of the fuel in the previous place of combustion(Nr. 6) with springs which with the help of the first spring(Nr. 10) the difference in length and flexibility that has from the rest ones gives us the possibility of loading and fluctuation of the turns in the crank(Nr. 4).

The differentiation of the length and the flexibility of the first spring(Nr. 10) are succeeded with a mechanism of hydraulic cylinders and axes that press the first spring(Nr. 10). The technical range of my invention is the engines of cars, of trucks, for screw-driven vehicles, airplanes, production of electrical energy and for the use in the space.

## Description

Description : Main body (Nr. 1) of the internal explosion engine up to the top of the piston(Nr. 2), Pistons of springs of the breathings(Nr. 3), Cranks(Nr. 4), Plate clutch(Nr. 5) similar to the existing until our days conventional technology, Cylinders(Nr. 6).

Description of the 'Discovery', replacement of the 'Explosive' energy with the energy of metallic springs(Nr. 7) of high return and resistance whose the one end will be stuck in the top of the pistons and the other end in the socket of the hatch(Nr. 8) of the top of the cylinders.

The hatches will be '3 for a four cylinder engine. This way, we succeed the elastic (of the return) power into rolling through the crank. The first cylinder(Nr. 9) will be longer than the rest ones.

Its length is going to be determined according to the needs of the reloading of the engine as well as the length and the power of the first spring (Nr. 10). The goal of this difference is the lesser use of the mechanism of the reloading as well as the achievement of a greater power.

In the first stage of the testing of the engine and in order to simplify all the construction, we construct the one cylinder of the reloading but if the buyers will ask it, it is possible to construct another one (in eight cylinder engine) and the achievement of more power.

In the top of the first cylinder we apply a hatch(Nr. 11) of long lease and socket of 4 extended cylinders of hydraulic pressure which will be differently placed, 2 to 2, concerning the relation between the length with the pistons.

Its goal is firstly the achievement of quite power of reloading in all courses of the reloading of the spring and secondly the synchronization of the pressing of the hydraulic pump (servo) in the same pressure to the four small cylinders(Nr. 12,13). The small axes(Nr. 14) whose ends will press successively a disc(Nr. 15) of reasonable depth and resistance in which the last end of the spring will be applied.

The last end of the tubes of the cylinders will be connected with a servo which will be mechanically moved with pedal of replacement of the existing one of the gas giving to the driver the full control of the turns of the engine if the engine is of a car, if the engine is for another use, it is succeeded through programming.

The starting is succeeded with the existing systems or with a power giving, also with the system of lubrication, of cooling. The systems of the transmission of the movement remain the conventional ones.

We succeed less of electric power in the vehicle. (There is no existence of spark of the contact points).

In the rest of the cylinders, the movement will take place automatically after synchronizing the distance of the movement space of the springs. The hatches of the top of the cylinders will be able to be dismantled in order to have a feasible replacement of the parts.

Moreover, for the sheer fall of the turns in the engine, we can activate a valve of liquids leak which will take place with the giving of movement from the putting on the servo of the brakes or the pedal of the clutch. In the further evolution of the engine, they can be electronically used for the adjustment of the pressure of the liquids and the adjustment of the power.

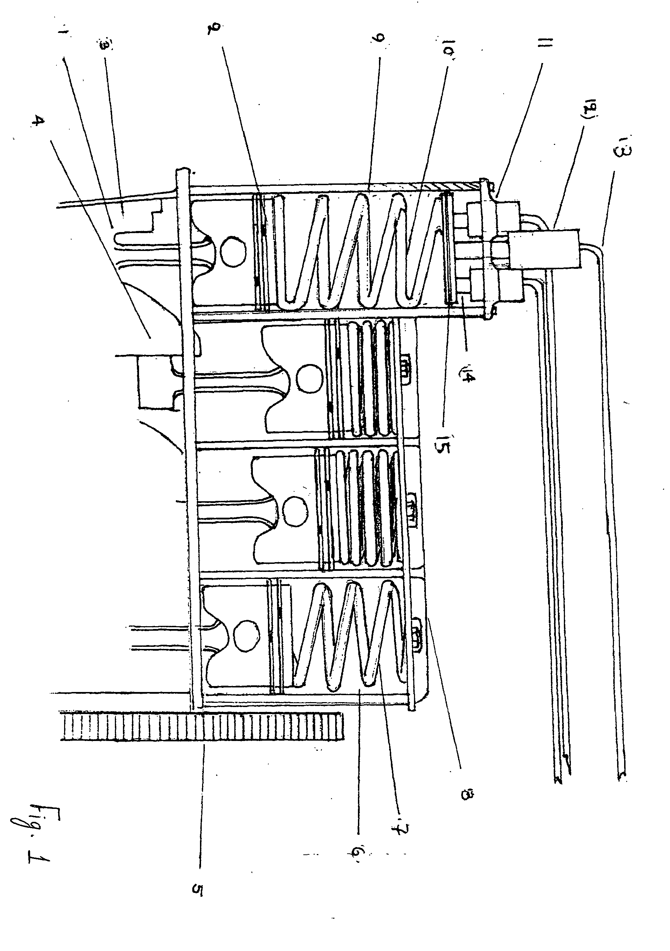

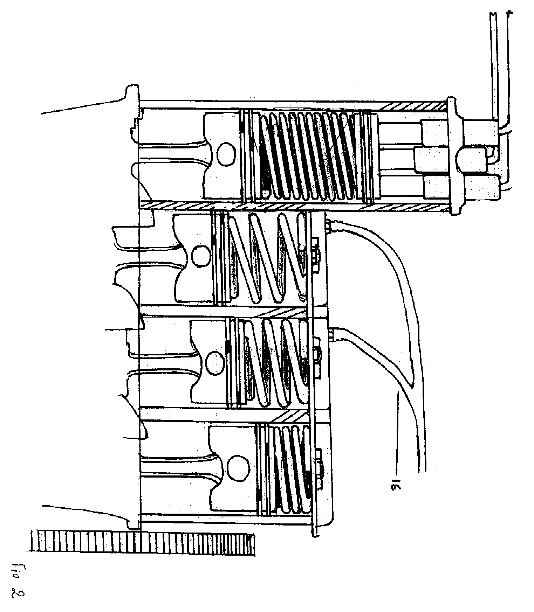

## Claims

1. A power production engine **characterised by** the placement of springs within the former cylinders' combustion space for their holding and exploitation on a four-cylinders motor with longer the first cylinder.

2. To compress the three shorter springs in accordance with the first claim, it is **characterised by** the fact that we use pressure heads tangential with the three shorter cylinders for their permanent compression.

3. As we mentioned in first claim the characteristic of first No. 9 cylinder is that it is longer to provide for us a loading path to spring No. 10.

4. As we mentioned on first claim the springs are four. The characteristic of spring No. 10 is the length, and its force is four times bigger than the other three ones to provide for us a pressure fluctuation ability towards the other three ones via pistons and a crank.

5. As we mention on fourth and fifth claim the spring No. 10 is longer, the cylinder No. 9 is longer and the characteristic ration of such a difference is to provide for us an obtuse angle of pressure in regards with the other ones so that consequently we will have a uniform grading and compulsory work supply by all cylinders.

6. As it is also mentioned on fourth claim and in order a pressure be exerted on spring No. 10, it is **characterised** from the fact that we use a servo pump that provides a hydraulic pressure on a mechanism of four small rollers No. 12 that will have a two by two array as to their length with the upper end of spring No. 10, the set up is made with electric power.

7. The servo pump I mention of sixth claim is **characterised by** the fact that it will be mechanically driven with a replacement of existing accelerator pedal providing us with a revolutions control and pressure multiplication.

8. The servo loading, reference is made to sixth and seventh claim, is **characterised by** the pipe lines No. 16 that provide for a sub-pressure by those two cylinders in expansion stroke and a socket retrieval end on servo for the provision of enough press force on servo.

9. Intermediately the four small shafts and spring No. 10, reference is made to my third, fourth, fifth and sixth claim, the fitting of a pressure-collecting disc is **characterized**.

## Amended claims

### Amended claims in accordance with Rule 137(2) EPC.

**1.** Energy production machine. It operates with power supply from No. 7 springs expansion, which are placed in the former combustion place of No. 6 cylinders on a four-cylinder engine for their holding and exploitation. The feature of engine is that the 1^{st} cylinder No. 9 is longer by four times that the other three ones.
As well as the spring of 1^{st} cylinder No. 10 is four times stronger and longer than the other three ones.
The tension of spring No. 10 is achieved by a mechanism with four small cylinders No. 12 that are arranged two by two as to their length with upper edge of spring No. 10 providing a hydraulic pressure on them via a servo and the assistance of a starting gear on initiation where more pressure is provided by the pressure of total of springs that are on a loading phase and we therefore have from a point and then a stable a pressure obtuse angle.
With zero load need the servo load is made from the hypopressure supply via pipelines No. 16 from the two cylinders in an expansion time.

**2.** In accordance with 1^{st} Claim the feature of 1^{st} cylinder No. 9 is that it is longer providing a load span to spring No. 10 that is four times stronger and longer than the other ones.
Target is the pressure fluctuation to the other three ones via pistons No. 2 and crank No. 4 and the achievement of a pressure obtuse angle to the total of springs.

**3.** In accordance with 1^{st} claim and in order a pressure be exercised on spring No. 10, it is **characterised** that we use a servo pump which provides hydraulic pressure on the mechanism with four small cylinders No.12 that press a reception disk No. 15. The servo pump is mechanically driven with a replacement pedal of existing accelerator pedal supplying a speed control and pressure multiplication.

**4.** In accordance with 1^{st} and 3^{rd} claim it is **characterised** that the servo loading is made with pressure supply by two cylinders in an expansion time via pipelines No. 16 and the supply of a retrieval end on servo. The machine initiation is achieved by electric power.
